# EUROPEAN PATENT APPLICATION

(11) **EP 4 116 907 A1**
(43) Date of publication of application: **11.01.2023**
(21) Application number: 22165930.3
(22) Date of filing: 31.03.2022
(51) Int. Cl.: G06Q 20/04, G06Q 20/08, G06Q 20/10, G06Q 20/20, G06Q 20/32, G06Q 20/38, G06Q 20/40, G06Q 30/04

(54) **FRICTIONLESS PAYMENT SYSTEM**

(30) Priority: 09.07.2021 US 202117371233
(71) Applicant: Evo Merchant Services, LLC, Melville NY 11747 (US)
(72) Inventor: Diamond, Andrew, Melville, 11747 (US)
(74) Representative: Grünecker Patent- und Rechtsanwälte PartG mbB

(57) **Abstract**

Disclosed are various embodiments for frictionless payment. A computing device obtains a document with native format transaction data from a merchant device, and determines a bill based at least in part on the native format transaction data and a trained predictive model. The computing device determines payment methods available for payment of the bill via a client device. The computing device generates a network page that can cause payment of the bill to be initiated by one of the payment methods that is unassociated with a user providing payment card information or personal information to the merchant, and transmit an indication to the merchant device that the bill was paid.

## Description

### BACKGROUND

Conventional point of sale systems often interact with proprietary software provided by an independent software vendor (ISV) to fulfill consumer payment of invoices or checks. Many existing systems are limited in their ability to communicate outside of a data format specified by the ISV. Further, it can be problematic to provide interoperability that is more involved than just data validation and translation.

Payment transactions may be fulfilled by methods including a physical exchange of cash, electronic exchange of payment card information with a merchant or ISV, and electronic exchange of personal information through a rewards application or other proprietary mobile device application. Physical exchange of cash may enable a virtually anonymous purchase, but cash is not universally accepted. It can be problematic to maintain one's anonymity during an electronic exchange with merchants and payment providers. As can be seen, there is a need for a payment system that can enable payments for transactions based on any ISV format to be fulfilled via anonymous and other payment methods.

### BRIEF DESCRIPTION OF THE DRAWINGS

Many aspects of the present disclosure can be better understood with reference to the following drawings. The components in the drawings are not necessarily to scale, emphasis instead being placed upon clearly illustrating the principles of the disclosure. Moreover, in the drawings, like reference numerals designate corresponding parts throughout the several views.
FIG. 1 illustrates a networked environment according to various example embodiments.
FIG. 2A illustrates an example of a representation of native transaction data in the networked environment of FIG. 1 according to various example embodiments.
FIG. 2B illustrates a document obtained by a frictionless payment application of FIG. 1 according to various example embodiments.
FIG. 3A illustrates an example flowchart of certain functionality implemented by portions of a frictionless payment application executed in a computing environment in the networked environment of FIG. 1 according to various embodiments of the present disclosure.
FIG. 3B illustrates an example flowchart of certain functionality implemented by portions of a bill generation application executed in a computing environment in the networked environment of FIG. 1 according to various embodiments of the present disclosure.
FIG. 3C illustrates an example flowchart of certain functionality implemented by portions of an anonymous payment application executed in a computing environment in the networked environment of FIG. 1 according to various embodiments of the present disclosure.
FIG. 4A illustrates an example user interface rendered by a computing device in the networked environment of FIG. 1 according to various example embodiments.
FIG. 4B illustrates an example user interface rendered by a client device in the networked environment of FIG. 1 according to various example embodiments.

The drawings illustrate only example embodiments and are therefore not to be considered limiting of the scope described herein, as other equally effective embodiments are within the scope and spirit of this disclosure. Additionally, certain dimensions or positionings may be exaggerated to help visually convey certain principles.

### DETAILED DESCRIPTION

The present application relates to a frictionless payment system that enables merchants and other business owners to streamline sales and accept new payment types for item(s) or service(s) that a consumer desires to purchase or consume. Transaction data associated with an item a consumer desires to purchase may often be provided in a proprietary or "native" format specified by an ISV, payment card provider, and the like.

In some examples, the transaction data for the item is input into a user interface rendered by a merchant device. The frictionless payment system can consume a JavaScript Object Notation (JSON) representation of the native transaction data sent by the merchant device. The JSON that is consumed can be seen as a first step in a description of a bill. JSON can be a list of pair of key-value pairs, e.g., labels and data for the label. An invoice or check can be described by a plurality of labels and values, "total" : 3.35, "tax" : 0.24, "appetizer" : "chopped liver" etc. The frictionless payment system is able to take this JSON with native transaction data in any "native" format specified by an ISV and determine a bill that can be paid by any payment method. The bill including bill data and various representations, QR codes, and locators can then be processed and transmitted accordingly as desired for any payment method. In one example, a phone-based QR code payment method and a cryptocurrency-based payment method may have different expectations for the bill. The frictionless payment system may describe a modifier of a dish as a "modifier" whereas the merchant device that transmitted the native transaction data may use a label such as "details" to describe the same or similar information.

The frictionless payment system can generate or determine a bill and provide the merchant device with a reference value. To generate in this context can mean to perform data validation and translation on the native transaction data sent by the merchant device. To determine a bill can include to generate the bill in the aforementioned ways or other ways, including by machine learning and the other aspects disclosed herein, and using any technology now known or in the future developed. Quantity, price, and other check details can be stored in a data store. The frictionless payment system can provide the reference value to the merchant device for the merchant device to convert into a Quick Response (QR) code. The QR code can be printed on an itemized check via a receipt printer.

In additional examples, frictionless payment system can determine the bill based at least in part on the native transaction data and a trained predictive model that has been trained using example documents associated with an independent software vendor's native format. The frictionless payment system can use an output of the trained predictive model being applied to the native transaction data to select a transformation template stored in a data store. The bill can be determined by applying the transformation template to input fields of the native format transaction.

In further examples, the frictionless payment system determines payment methods available for payment of the bill via a client device. The frictionless payment system generates a network page that can cause payment of the bill to be initiated by one of the payment methods that is unassociated with a user providing payment card information or personal information to the merchant, and transmits an indication to the merchant device that the bill was paid. In the following discussion, a general description of the frictionless payment system and its components is provided, followed by a discussion of the operation of the same.

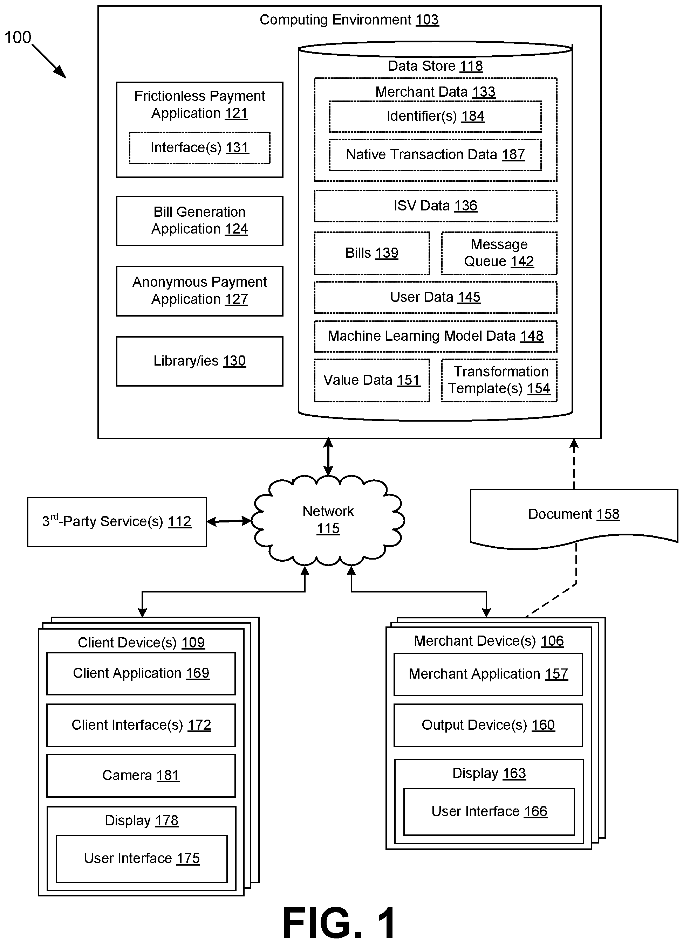

With reference to FIG. 1, shown is a networked environment 100 according to various embodiments. The networked environment 100 can include a computing environment 103, one or more merchant device(s) 106, one or more client device(s) 109, and one or more 3^{rd}-party service(s) 112 in data communication via a network 115. The 3^{rd}-party service 112 may be any computing device, computing environment, data provider, service provider, payment card network, online payment platform, or computing resource provider, which may be provided by a third-party or by the provider of computing environment 103. The network 115 includes, for example, the internet, intranets, extranets, wide area networks (WANs), local area networks (LANs), wired networks, wireless networks, cable networks, satellite networks, or other suitable networks, *etc.,* or any combination of two or more such networks.

The computing environment 103 may comprise, for example, a server computer or any other system providing computing capability. Alternatively, the computing environment 103 may employ a plurality of computing devices that may be arranged, for example, in one or more server banks or computer banks or other arrangements. Such computing devices may be located in a single installation or may be distributed among many different geographical locations. For example, the computing environment 103 may include a plurality of computing devices that together may comprise a hosted computing resource, a grid computing resource, and/or any other distributed computing arrangement. In some cases, the computing environment 103 may correspond to an elastic computing resource where the allotted capacity of processing, network, storage, or other computing-related resources may vary over time.

Various applications and/or other functionality may be executed in the networked environment 100 according to various embodiments. Also, various data may be stored in a data store 118 that is accessible to the computing environment 103. The data store 118 may be representative of a plurality of data stores 118 as can be appreciated. The data stored in the data store 118, for example, is associated with the operation of the various applications and/or functional entities described below.

The components executed on the computing environment 103, for example, can include a frictionless payment application 121, a bill generation application 124, an anonymous payment application 127, one or more library/ies 130, and other applications, services, processes, systems, engines, or functionality not discussed in detail herein. The frictionless payment application 121 can be executed to enable frictionless payments in the networked environment 100, including by communicating over the network 115 with the merchant device 106 and the client device 109 to facilitate payments. Point of sale systems may often interact with proprietary software provided by an independent software vendor (ISV) to fulfill consumer payment of invoices or checks via cash and credit card. It can be challenging for many existing systems that have proprietary or "native" invoice or check documents to fulfill payment transactions via new methods. The frictionless payment system including the frictionless payment application 121 can solve this and other issues. In one example, a consumer desires to purchase or consume one or more item(s) at a merchant location associated with one of the merchant devices 106. Transaction data for the item(s) is input into a user interface rendered by a merchant device 106.

The frictionless payment application 121 can include one or more interface(s) 131 for communicating in the networked environment 100 over the Hypertext Transfer Protocol (HTTP) or other suitable protocol. The transaction data associated with one or more item(s) can be obtained from the merchant device 106 through the interface 131. The frictionless payment application 121 can respond through the interface 131 to requests from the merchant device 106 concerning status of bill(s) for the item(s). The interface(s) 131 can include a first interface for obtaining documents from the merchant device 106, and a second interface for transmitting an indication to the merchant device 106 that a bill associated with native transaction data was paid.

The frictionless payment application 121 can provide a notification comprising a Uniform Resource Identifier (URI) or Uniform Resource Locator (URL) (or other locator) that can trigger payment of the bill 139 in the instance the notification is transmitted to the client device 109 or the merchant device 106. The URI, URL, or other aspect of the notification can relate to the network page(s) and mobile device application(s) as further described below.

The frictionless payment application 121 can create a new or modified URL in some examples, such when one or more invoice or check documents are obtained and determined to relate to one or more item(s) a consumer desires to purchase at a merchant location. In one example, the frictionless payment application 121 can obtain a first document and a second document from the merchant device 106 that respectively comprise an initial check and a check after one or more item(s) have been added. The frictionless payment application 121 can generate a new or modified URL in an instance in which the frictionless payment application 121 determines that the second document is associated with the first document.

The frictionless payment application 121 can include network page server functionality (e.g., a web server, application server, and the like). The frictionless payment application 121 can generate a network page for rendering on the client device 109 for payment of a bill associated with item(s) a consumer desires to purchase or consume. In an instance in which the network page is rendered on the client device 109, the frictionless payment application 121 can transmit an indication that the bill was paid to the merchant device 106. In another example, the frictionless payment application 121 can enable a custom Quick Response (QR) code to be generated that can be scanned by a client device for payment of a bill. The frictionless payment application 121 can include functionality that causes a short message service (SMS), text, email, or other notification be transmitted to the client device 109.

The bill generation application 124 can be executed to generate a bill based at least in part on data stored in the data store 118. Merchant devices, point of sale systems and other systems may be limited in their ability to communicate outside of a data format specified by one or more independent software vendors (ISVs). Providing interoperability that is more involved than just data validation and translation can be problematic. The frictionless payment system including the bill generation application 124 can solve this and other issues.

In some examples, the bill generation application 124 is executed to obtain example transaction documents for generating a trained predictive model using a machine learning library or other library/ies 130. The bill generation application 124 can store a template 154 and other data in the data store 118 that is associated with generation of a bill for a particular one of the merchant devices 106. The bill generation application 124 can apply the template 154 to input fields of a native format transaction of the merchant device 106 to determine a bill 139 for item(s) a consumer desires to purchase or consume. The bill 139 can include a transformed subset of input fields.

The bill generation application 124 can leverage a repository of check and invoice formats stored in the merchant data 133 and data forms for ISVs stored in the ISV data 136. Machine learning aspects of the bill generation application 124 can support an integration process and identify the specific invoice format and data items for a particular one of the ISVs via the ISV data 136.

The anonymous payment application 127 can be executed to enable and fulfill payment transactions between merchant devices 106 and client devices 109, including in ways that may not be possible through conventional point of sale systems, ISVs, and payment processing networks. The anonymous payment application 127 may be executed to facilitate anonymous payments. Item purchase transactions may be fulfilled by methods including a physical exchange of cash, electronic exchange of payment card information with a merchant or independent software vendor, and electronic exchange of personal information through a rewards application or other proprietary mobile device application. Physical exchange of cash may enable a virtually anonymous purchase, but cash is not universally accepted. It can be problematic to maintain one's anonymity during an electronic exchange with merchants and payment providers. The frictionless payment system including the anonymous payment application 127 can solve these and other issues.

The frictionless payment application 121 and/or the anonymous payment application 127 can receive, from a client device 109 associated with a user, a request for payment of a bill 139 that is associated with the native transaction data provided by a merchant device 106. The anonymous payment application 127 can verify an identity of a user of the client device 109, or cause the identity of the user to be verified.

In some examples, the request includes an assertion associated with a web authentication application programming interface (API) or other assertion that is based at least in part on a signature signed by a private key. Examples of the present disclosure can facilitate interactions according to the Web Authentication API (also known as WebAuthn) specification. The anonymous payment application 127 can cause the identity of the user to be verified based at least in part on the assertion, including according to the WebAuthn specification. As disclosed herein, the request can be for anonymous validation of the client device 109, anonymous validation of the merchant device 106, anonymous validation of the 3rd-party service 112, anonymous validation of any computing device associated with the frictionless payment system, or anonymous validation of a user associated with one of the computing devices. As further described below, the request can be for anonymous creation of a currency or other value.

The anonymous payment application 127 can, in some examples, determine at least one of a plurality of payment methods that are unassociated with providing payment card information or personal information to the merchant device 106. In an instance in which an identity of the user is verified, the frictionless payment application 121 can generate a network page with a selectable user interface element that can cause a payment of the bill by one of the payment methods.

In further examples, the anonymous payment application 127 can include production of a currency unique to a merchant, patron or consumer, and the client device 109 that can be created anonymously. One aspect includes that cryptography including a cryptographic certificate can be a stand in for a merchant or other transaction partner. The anonymous payment application 127 can use the cryptography act to verify an identity of a producer and a consumer of a bill. Another aspect includes that a production of value or currency can be based at least in part on a cryptography act.

Examples of the present disclosure can allow a currency to be produced and consumed in relation to one or more merchants associated with the merchant devices 106. The currency or value can be created denovo and spent anonymously. The anonymous payment application 127 can create value that can be spent anonymously in an instance in which the anonymous payment application 127 or other aspect of the frictionless payment system authenticates a user of the client device 109 without the user having a user account with the anonymous payment application 127. As disclosed herein, the anonymous payment application 127 can track value and allow the anonymous creation of value where that same value can be spent anonymously by a creation triggering individual and the client device 109. Examples of the present disclosure can extend beyond merely spending/transacting anonymously to include creation of denovo value.

The libraries 130 may include a training framework that is a software library used to design, build, and train machine learning models. Examples training frameworks include TensorFlow^{™}, Caffe, Apache^{®} Singa, Microsoft^{®} Cognitive Toolkit (CNTK), Theano, and Torch. A training framework uses deep learning methods to output a trained predictive model that is a snapshot of a trained neural network that the bill generation application 124 can store in the data store 118.

The merchant device 106 is representative of any one or more merchant devices 106 that can be coupled to the network 115, such as a point of sale computing device, payment terminal, merchant computing device, computing environment, data provider, service provider, server computer, computing resource provider, or other devices with like capability. The merchant device 106 can be configured to execute various applications such as a merchant application 157 and/or other applications. The merchant application 157 can be executed to input transaction data for one or more item(s) input for a check into the user interface rendered 166 by the merchant device 106. A check can refer to an article that is printed after the transaction data is input into the user interface rendered 166. An example of a printed check is shown below.

### Example Printed Check

| | | |
|---|---|---|
| Date: 2/7/2021 | | Time: 7:00 pm |
| Check: 1469 | | Server: 2006 |
| Seat 1 | | |
| | Sandwich | $5.99 |
| | Soda | $2.49 |
| Seat 2 | | |
| Salad | | $4.99 |
| Subtotal: | | $13.47 |
| Tax: | | $1.08 |
| Total: | | $14.55 |

The merchant application 157 can be executed to allow the merchant device 106 to transmit transaction data associated with checks over the network 115. In one example, the merchant application 157 transmits a document 158 comprising a native format transaction associated with an item a consumer desires to purchase, or comprising example transaction documents with native format transaction data associated with transactions of independent software vendors. In an example, the document(s) comprise a JavaScript Object Notation (JSON) representation of data fields associated with an independent software vendor (ISV). The native format transaction data can be formatted as JSON or other representation that allows data in native format to be transmitted by the merchant application 157 to the frictionless payment application 121.

The merchant application 157 can be executed to transmit the document 158 via an Hypertext Transfer Protocol (HTTP) post comprising the document 158 and a merchant identifier 184 that uniquely identifies a merchant associated with the merchant device 106. An example HTTP POST is shown below.

```
 POST /pos/public/newreceipt HTTP/1.1
 Accept: text/plain
 SIGNATURE:
 d6142fe776c2f62ed6926dfea99ab1211d2df3e138972615447e946122f28
 c2f
 Content-Length: 732
 Content-Type: application/json
 Host: { hostname }
 { JSON OF CHECK }
```

The SIGNATURE can be calculated based on the POST body in the /newreceipt. It can be calculated, for example using the following PHP code: $expected_signature = hash_hmac('sha256', $body, $app_secret, false). This is just one example of how the document 158 can include a signature associated with a body of the document 158. Embodiments of the frictionless payment application 121 can accept lowercase hex as noted by the "false" field in the PHP code.

The frictionless payment application 121 and/or the bill generation application 124 can obtain the document 158 from the merchant device 106. The merchant application 157 can receive a response comprising a bill status identifier generated by the bill generation application 124. In this way, the bill status identifier can be associated with one of the bills 139 that is determined by the bill generation application 124. The bill status indicator and/or other bill data of the bills 139 can be provided by the frictionless payment application 121 to the merchant device 106 for the merchant device 106 to convert into a Quick Response (QR) code. An example response is provided below. In this example, the HTTP status code is 200 indicating the document has been received successfully.

```
 HTTP/1.1 200 OK
 Date: Mon, 27 Jun 2021 21:10:53 GMT
 Server: Apache/2.4.18 (Ubuntu)
 Status: 200 OK
 Content-Length: 0
 Keep-Alive: timeout=5, max=100
 Connection: Keep-Alive
 Content-Type: text/html; charset=UTF-8
 { bill status identifier }
```

The merchant application 157 can use the bill status identifier to query the frictionless payment application 121 about whether a bill 139 has been paid, or for other reasons. For example, the merchant application 157 can transmit a request for removal of the bill 139 in an instance in which the bill 139 has been paid using a payment method via the merchant device 106 (e.g., cash), or paid in other ways. The frictionless payment application 121 can obtain an indication from the merchant device 106 that the bill 139 has been made. The frictionless payment application 121 can refrain from initiating payment of a bill 139 that has been paid.

The frictionless payment system can identify the transaction data in the JSON or other representation in the document 158 and process it to be stored in the data store 118 as the native transaction data 187. The bill generation application 124 can generate a bill status identifier and other data to be stored as one of the bills 139.

Examples of the frictionless payment application 121 can be executed to provide status for the bills 139. The frictionless payment application 121 including the interface(s) 131 can be executed to provide responses to structured queries sent by the merchant device 106. For example, the queries can be formatted as follows:

```
 https://{locator}/pos/public/paid/{bill status identifier}
 https://{locator}/pos/public/longpaid/{bill status
 identifier}
 https://{locator}/pos/public/paidstatus/{bill status
 identifier}/{consumer_id}
```

The merchant application 157 can transmit a request to the frictionless payment application 121 using /paid/{bill status identifier} to obtain a space separated list of the bills 139 closed within a pre-defined threshold of time, e.g., the last 30 minutes. The frictionless payment application 121 can execute the /paid/{bill status identifier} to provide a list of the bills 139 that have been closed, e.g., in a defined amount of time such as the last 30 minutes. The /longpaid and /paidstatus operations can return a JSON of bill data of the bill 139, including time the bill 139 was paid (e.g., key of "time"), and a forward slash separated amount paid and the amount which is a tip (key of "feathers").

The frictionless payment application 121 can provide a JSON array of the bills 139 that have been paid in response to a /longpaid operation. The /paidstatus operation can return a JSON for a specific bill 139, e.g., that has been paid in the last 12 hours. The frictionless payment application 121 can implement the paid, longpaid, and paidstatus operations to provide responses to a corresponding GET call from the merchant device 106.

The merchant application 157 can obtain one or more bill(s) 139 that have been generated or determined by the bill generation application 124. In some examples, the merchant application 157 queries the message queue 142 to determine if a bill 139 is available for the merchant device 106. The merchant application 157 obtains the bill 139 which then joins a carousel of bills for processing by the merchant device 106, which can include being output to the output device(s) 160, or rendered in the user interface 166.

The merchant device 106 can include output devices 160 such as a receipt printer or audio speakers, and a display 163 upon which a user interface 166 generated by the merchant application 157, or another application can be rendered. The display 163 can include liquid crystal display (LCD) displays, gas plasma-based flat panel displays, organic light emitting diode (OLED) displays, electrophoretic ink (E-ink) displays, LCD projectors, or other types of display devices, *etc.* The merchant device 106 can include one or more input devices, such as a mouse, keyboard, touch pad, or touch screen, which facilitate a user interacting with the merchant application 157 or controlling the merchant device 106. The merchant application 157 can cause a QR code to be output by one of the output devices 160.

The merchant application 157 can obtain the bill status indicator and use it to determine status for the bill 139 associated with the native transaction data 187. In this way, the merchant device 106 can do a batch close that includes bills 139 determined by the bill generation application 124 and paid by the client device 109.

The client device 109 is representative of any one or more client devices 109 that can be coupled to the network 115, such as a desktop computer, a laptop computer, personal digital assistants, smartphones, smartwatches, web pads, tablet computer systems, or other devices with like capability. The client device 109 can be configured to execute various applications such as a client application 169, client interfaces 172 and/or other applications.

The client application 169 can comprise a browser, mobile application, or other suitable application. The client application 169 may be executed in the client device 109, for example, to access and render network pages, or other network content served up by at least one computing device of the computing environment 103 and/or other servers, thereby rendering a network page comprising selectable user interface element(s) in the form of a user interface 175 on the display 178. The client application 169 may cause payment of a bill 139 by at least one of a plurality of payment methods available to the client device 109 through the client interface(s) 172, the anonymous payment application 127, or one of the 3rd-party services 112. In some examples, the client device 109 may include a camera 181 that the client application 169 uses to scan a machine-readable bar code, Quick Response (QR) code, or other optically- or visually-readable indicators rendered in the user interface 166 or the user interface 175, or output via one of the output devices 160 such as a receipt printer.

The data stored in the data store 118 includes, for example, merchant data 133, Independent Software Vendor (ISV) data 136, bills 139, a message queue 142, user data 145, machine learning model data 148, value data 151, one or more transformation templates 154, and potentially other data. The merchant data 133 can include identifiers 184, native transaction data 187, and other data for merchants enrolled in the frictionless payment system and particular merchant devices 106 that may be in communication with the computing environment 103 over the network 115. The identifiers 184 can include one or more merchant identifiers (e.g., a Merchant Identification Number (MID) or Terminal Identification Number (TID)) that can uniquely identify a particular merchant or one of the merchant devices 106. For example, the MID can be a distinctive, numerical code that identifies a merchant to the frictionless payment application 121 or other aspect of the computing environment 103.

The native transaction data 187 can include a check number, order number, ticket number, receipt number, or other identifier that uniquely identifies a transaction from among other transactions of one, some, or all of the merchant devices 106. The native transaction data 187 can include fields and their respective values, including a subtotal, a tax amount, a date and time of a transaction, a seat number, a table number, items, modifiers, or other data about item(s) or service(s) that a consumer desires to purchase or consume.

The Independent Software Vendor (ISV) data 136 may comprise data about one or more ISVs including an ISV identifier that the frictionless payment application 121 can use to identify from among the native transaction data 187 fields that correlate to a particular one of the ISVs. The bills 139 can include data about one or more bills determined by the bill generation application 124. Bill data can include check data, merchant name, a primary POS TID, a primary POS service key, a PayFabric TID, a PayFabric service key, a receipt header, a DBA, an address, a city, a state, a zip code, a phone number, other fields as described herein, and other suitable fields.

By consuming aspects of the native transaction data 187 including the metadata, the bill generation application 124 is able to interpret such metadata to change behavior including how network pages are generated, or how the bill(s) 139 are presented. In one example, a particular merchant user (e.g., a restaurant server) may be associated with a merchant device 106 that is a handheld device the merchant user carries table to table. A notification that can cause payment of the bill 139 can be transmitted to the merchant device 106, and the merchant device 106 can render a network page comprising a Uniform Resource Locator (URL), a Quick Response (QR) code or other encoded representation for the bill 139.

The message queue 142 can store notifications, messages, and other suitable content associated with a particular merchant device 106 or a particular client device 109. The frictionless payment application 121 can store data in the message queue 142 that causes a short message service (SMS), text, email, or other notification be transmitted to the client device 109. The client application 169 or other aspect of the client device 109 can receive the notification, and use a QR Code, a network page location, or other information embedded in the notification to proceed for payment of one of the bills 139.

In some examples, the interfaces 131 of the frictionless payment application 121 include the message queue 142 to provide message broker functionality across the network 115. In other examples, the libraries 130 can include Message Queuing Telemetry Transport (MQTT), Redis, or other publish-subscribe network protocol for data communication via the network 115.

The user data 145 may include profile information, such as name and email address or other contact information. The user data 145 can also include a list of payment methods available to the client device 109 (or a user associated with the client device 109). The user data 145 can include an indication that the client device 109 is authorized to consume or generate a value identified in value data 151 stored in the data store 118.

The machine learning model data 148 can be data about machine learning models. The machine learning models can be trained or untrained. A trained machine learning model can be created using data sets with labeled input data. A trained predictive model can be created that is trained using a plurality of example transaction documents 158 comprising native format transaction data associated with transactions of independent software vendors associated with the ISV data 136. Historical example transaction documents can be compiled and associated with an ISV or a particular merchant device 106. The file of historical example transaction documents may include native format transaction data. The trained predictive model can determine a plurality of features corresponding to a plurality of categories of the native transaction data.

Example categories include "total," "merchant ID," "item modifier," etc. Example features are shown below:
1) Length
2) Nesting Level
3) Has a decimal point
4) Is an integer
5) Has numbers and letters
6) How often repeated or unique
7) Contains spaces
8) Contains string "mod"
9) Is an empty list
10) Depth of containing array
11) Contains string "tax"
12) Contains string "total"
13) Contains string "sub"

The training data can include values of features of one or more example documents transmitted by the merchant device 106 to the bill generation application 124. As part of creating training data, the bill generation application 124 can extract features from the native transaction data to be stored as the machine learning model data 148. The trained predictive model can include a k-nearest neighbor model.

The value data 151 can include data about value that can be accumulated, spent, or consumed by the client device 109 or a user associated with the client device 109. Some examples include data about payment cards, electronic wallets, reward points, online payment platforms, Automated Cash Handling (ACH) payments out of a bank account, or store credits. Further examples include value denominated by stars, dollars, yen, time value or any possible stored value. The value can be data that permits access to a resource. The value data 151 can track an amount of time or a number of occurrences associated with the client device 109 to permit access to the resource.

In a non-limiting example, the user of the client device 109 can be permitted access, based at least in part on the value data 151, to a resource that can require a certain time investment, e.g., 2 hours, or a number of occurrences, e.g., two visits. The value data 151 can for example allow a user of the client device 109 who has visited a sporting location to access a climbing wall or other resource that can only be accessed during predefined hours, e.g., 3-4 pm.

The one or more transformation templates 154 are also referred to herein as one or more vendor transformation templates 154. The vendor transformation templates 154 can include data about transformations of a native format of an ISV identified in the ISV data 136. The transformation templates 154 can include a JavaScript Object Notation (JSON) query and transformation language.

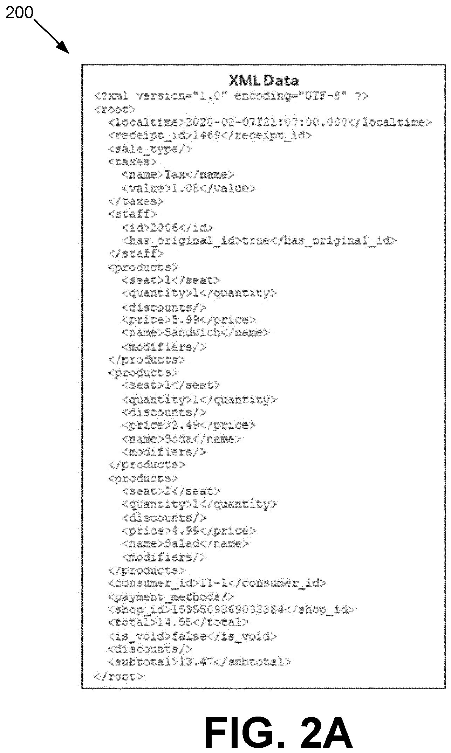

Turning to FIG. 2A, shown is an example of an Extensible Markup Language (XML) representation 200 of native transaction data in the networked environment 100 of FIG. 1. The XML representation 200 shows the example of a proprietary or "native" format specified by an ISV, payment card provider, and the like. The XML representation 200 has a plurality of key-value with native transaction data, e.g., key "receiptjd" with value of "1469", key "price" with value of "5.99," and key "consumer_id" with value of "11-1."

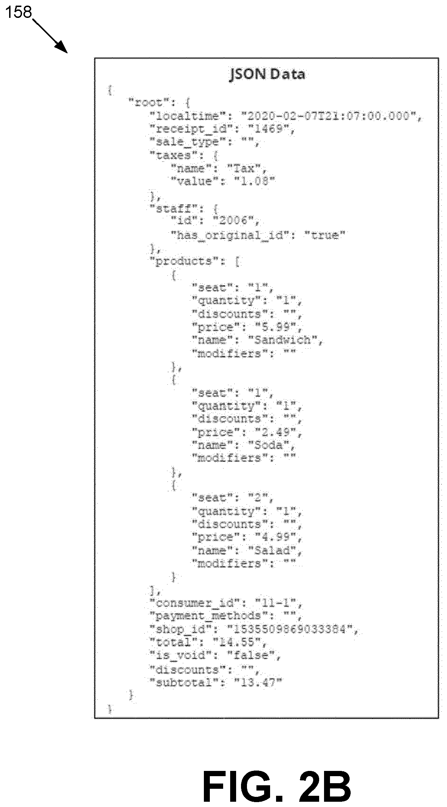

One aspect of the frictionless payment system is the conversion of a check, such as shown in FIG. 2A, to a JSON format, such as shown in FIG. 2B. FIG. 2B illustrates a document 158 obtained by the frictionless payment application 121 of FIG. 1 according to various example embodiments. A native ISV format of a receipt or check, such as the XML representation 200, or HTML, CSV, etc., can be converted into the JSON format so that it will be suitable to be transmitted as the document 158. The bill generation application 124 can take into account that formats used by the ISVs or the merchant devices 106 can be different, and perform integration for determining bills 139 based at least in part on the receipt fields. A receipt can have a check number, ticket numbers, etc., that is unique to the check or order as well as a merchant identifier (a MID or TID), a subtotal and a tax amount, and finally a date and time of the order. The ticket can also have a seat number, table number, items and modifiers.

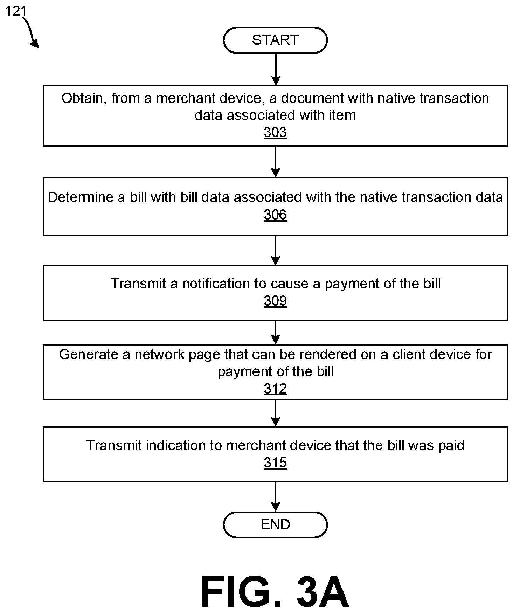

Referring next to FIG. 3A, shown is an example flowchart of certain functionality implemented by portions of the frictionless payment application 121 executed in the computing environment 103. Beginning with box 303, the frictionless payment application 121 can obtain one or more documents 158 from the merchant device 106. The document(s) 158 can include native transaction data associated with an item or service a consumer desires to purchase or consume. In some examples, the document 158 further comprises an identifier of a JavaScript Object Notation (JSON) representation of data fields associated with an independent software vendor identified by the ISV data 136. The frictionless payment application 121 can store the native transaction data, the identifier, and potentially other data of the document 158 in the data store 118.

At box 306, the frictionless payment application 121 can cause the bill generation application 124 to determine a bill 139 with bill data associated with the native transaction data 187. In some other examples, the frictionless payment application 121 can generate the bill 139 with the bill data by performing data validation and translation on the native transaction data 187 and storing the results as the bill 139. The frictionless payment application 121 can transmit to the merchant device 106 a bill status identifier that uniquely identifies the bill 139 from among other bills 139 stored in the data store 118.

At box 309, the frictionless payment application 121 can transmit a notification to cause a payment of the bill 139. In some examples, the notification is transmitted to at least one of the merchant device 106 or the client device 109. The notification can include a Uniform Resource Locator (URL), or a Quick Response (QR) code or other encoded representation of a Uniform Resource Locator (URL). In an instance in which the notification of box 309 is transmitted to the merchant device 106, the frictionless payment application 121 can cause the Uniform Resource Locator (URL), the Quick Response (QR) code or the other encoded representation of the Uniform Resource Locator (URL) to be output to a receipt printer or other output device 160 of the merchant device 106.

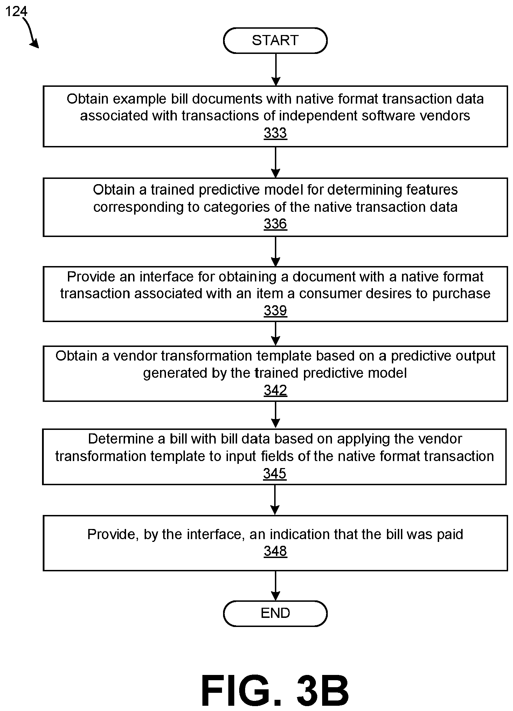

At box 312, the frictionless payment application 121 can generate a network page that can be rendered by the merchant device 106 or the client device 109. The network page can include a selectable user interface element that can cause a payment of the bill 139 by at least one of a plurality of payment methods, including as further discussed in FIG. 3B. In an instance in which a QR code is captured by the camera 181 of the client device 109 or the notification is transmitted to the client device 109, the frictionless payment application 121 can generate the network page that can be rendered on the client device 109 for payment of the bill 139 by a payment card, an electronic wallet, reward points, an online payment platform, a store credit, or any other suitable payment.

At box 315, the frictionless payment application 121 can transmit an indication that the bill 139 was paid to the merchant device 106. In some examples, the indication is transmitted in an instance in which the network page is rendered on the display 178 of the client device 109 as the user interface 175. In some examples, the frictionless payment application 121 is configured to transmit the indication in an instance in which at least one computing device of the computing environment 103 obtains a Hypertext Transfer Protocol (HTTP) get request from the merchant device 106. The HTTP get request can comprise a bill status identifier that uniquely identifies one of bills 139. Thereafter, the portion of the frictionless payment application 121 can proceed to completion.

FIG. 3B illustrates an example flowchart of certain functionality implemented by portions of the bill generation application 124 according to various embodiments of the present disclosure. Beginning with box 333, the bill generation application 124 can obtain a plurality of example documents 158 comprising native format transaction data 187 associated with transactions of independent software vendors identified by the ISV data 136.

At box 336, the bill generation application 124 can obtain a trained predictive model for determining a plurality of features corresponding to a plurality of categories of the native transaction data 187. The trained predictive model can include a k-nearest neighbor model. The plurality of features can correspond to a plurality of key-value pairs of a JSON or other representation of the native transaction data 187. The document 158 can include the plurality of key-value pairs. In some examples, the bill generation application 124 can generate the trained predictive model using a library 130 and the plurality of example documents 158 obtained at box 333.

At box 339, the bill generation application 124 can provide at least one interface 131 for obtaining a document 158 comprising a native format transaction associated with an item a consumer desires to purchase. The consumer can be associated with the client device 109. The interface 131 can be configured to accept the document 158 via an Hypertext Transfer Protocol (HTTP) post comprising the document 158 and a merchant identifier 184. In some examples, the document 158 can include the merchant identifier 184. In an instance in which the document 158 includes a signature, the interface 131 can be configured to accept the document 158 based at least in part on validating the signature.

At box 342, the bill generation application 124 can obtain a vendor transformation template 154 based at least in part on a predictive output generated by the trained predictive model. In some examples, the bill generation application 124 obtains the vendor transformation template 154 in an instance in which the document 158 is obtained via the interface 131. The vendor transformation template 154 can include a JavaScript Object Notation (JSON) query and transformation language.

At box 345, the bill generation application 124 can determine a bill 139 comprising bill data based at least in part on applying the vendor transformation template 154 to input fields of the native format transaction. The bill generation application 124 can determine the bill 139 based at least in part on a JavaScript Object Notation (JSON) representation, for example where the document 158 comprises the JSON representation.

At box 348, the frictionless payment application 121 and/or the bill generation application 124 can provide the at least one interface 131 for transmitting an indication that the bill 139 was paid. Thereafter, the portion of the bill generation application 124 can proceed to completion.

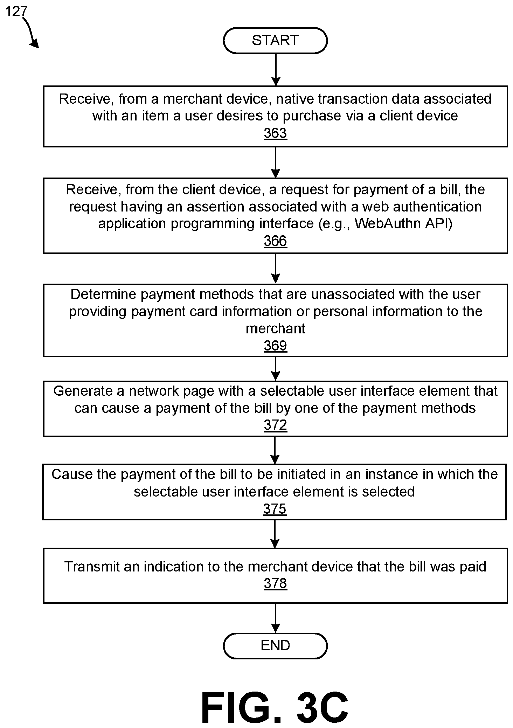

FIG. 3C illustrates an example flowchart of certain functionality implemented by portions of the anonymous payment application 127. Beginning with box 363, the anonymous payment application 127 can receive the merchant device 106 native transaction data associated with an item a user desires to purchase from a catalog of items offered by a merchant associated with the merchant device 106. In some examples, the frictionless payment application 121 and/or the anonymous payment application 127 can transmit to the merchant device 106 a bill status identifier that uniquely identifies a bill 139 from among a plurality of bills 139 stored in the data store 118.

At box 366, the anonymous payment application 127 can receive, from a client device 109 associated with the user, a request for payment of a bill 139 that is associated with the native transaction data. The request can comprise an assertion associated with a web authentication application programming interface (API) or other assertion that is based at least in part on a signature signed by a private key. In some examples, the web authentication API is the WebAuthn API.

At box 369, the anonymous payment application 127 can determine at least one of a plurality of payment methods that are unassociated with the user of the client device 109 providing payment card information or personal information to the merchant device 106. The plurality of payment methods can comprise: an electronic wallet accessible to a client interface 172 of the client device 109, or a store credit stored in value data 151 in the data store 118. In some examples, the payment methods can be performed by or initiated by the 3^{rd}-party service(s) 112.

In some examples, the anonymous payment application 127 determining the at least one of the plurality of payment methods comprises determining that the client device 109 is authorized to consume or generate a value identified in the value data 151 stored in the data store 118. Determining that the client device 109 is authorized to consume the value can be based at least in part on the assertion associated with the web authentication API.

At box 372, the frictionless payment application 121 and/or the anonymous payment application 127 can generate a network page comprising a selectable user interface element that can cause a payment of the bill 139 by the at least one of the plurality of payment methods. The network page can be generated in an instance in which an identity of the user is verified, including by being verified based at least in part on the assertion.

At box 375, the anonymous payment application 127 can cause the payment of the bill 139 to be initiated by the at least one of the plurality of payment methods. Payment can be initiated, for example, in an instance in which the selectable user interface element of the network page generated at box 372 is selected. At box 378, the frictionless payment application 121 and/or the anonymous payment application 127 can transmit to the merchant device 106 an indication that the bill 139 was paid. Thereafter, the portion of the anonymous payment application 127 can proceed to completion.

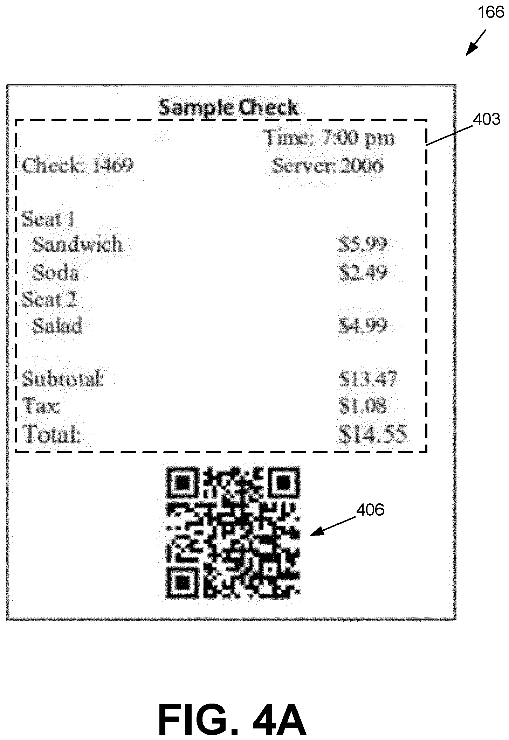

FIG. 4A illustrates an example user interface 166 rendered by the merchant device 106, the client device 109, or other computing device in the networked environment of FIG. 1. The user interface 166 is also an example of an output that can be output via one of the output devices 160 such as a receipt printer of the merchant device 106. The user interface 166 includes representations 403 for native transaction data 187, and a QR code 406. The QR code 406 can be based on the bill data 139 stored in the data store 118. The frictionless payment application 121 can process QR Code transactions using a TID stored in the merchant data 133 that is the TID for primary point of sale system or computing device at the merchant location, which can be the merchant device 106.

In line with the example of FIG. 4A, a bill 139 can be generated by the bill generation application 124 and transmitted to the merchant device 106. The merchant application 157 can render the user interface 166 on the display 163 as the user interface 166, or output to one of the output devices 160. The client application 169 can scan the QR code 406 for payment of one of the bills 139. In the instance in which the QR code is scanned, the client application 169 can render a network page generated by the frictionless payment application 121.

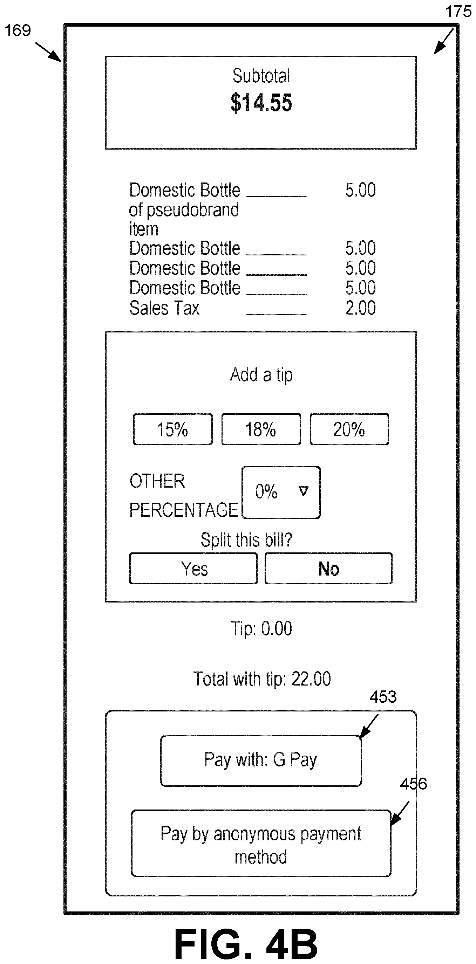

FIG. 4B illustrates a user interface 175 rendered by the client application 169 in the networked environment of FIG. 1. Continuing with the example of FIG. 4A, a user can receive a notification or scan a QR code associated with a particular one of the bills 139. In FIG. 4B, the frictionless payment application 121 has generated a network page that can cause payment of the bill 139 to be initiated by payment card, electronic wallet, reward points, online payment platform, Automated Cash Handling (ACH) payment out of a bank account, store credit, or other one of a plurality of payment methods accessible to the client device 109. The user interface 175 of FIG. 4B rendered by the client application 169 include selectable user interface elements 453, 456 that can cause a payment of the bill 139 by at least one of the plurality of payment methods. The selectable user interface element 453, if selected, can cause the payment of the bill 139 using Google^{™} Pay, Apple^{™} Pay, or other electronic wallet accessible via the client interface 172 and/or the 3^{rd}-party service(s) 112. The selectable user interface element 456, if selected, can cause the payment of the bill 139 using payment card information or other data in the data store 118 or otherwise available to the frictionless payment application 121. In some examples, the selectable user interface element 456 shown in FIG. 4B can cause the payment of the bill 139 using an anonymous payment method that is unassociated with a user providing payment card information or personal information to the merchant device 106.

The computing environment 103, the merchant device(s) 106, the client device(s) 109, and the 3rd-party service(s) 112 include at least one computing device. Each computing device includes at least one processor circuit, for example, having a processor and a memory, both of which are coupled to a local interface. To this end, each computing device may comprise, for example, at least one server computer or like device. The local interface may comprise, for example, a data bus with an accompanying address/control bus or other bus structure as can be appreciated.

Stored in the memory are both data and several components that are executable by the processor. In particular, stored in the memory and executable by the processor are the frictionless payment application 121, the bill generation application 124, the anonymous payment application 127, the client application 169, and the merchant application 157, and potentially other applications. Also stored in the memory may be a data store 118 and other data. In addition, an operating system may be stored in the memory and executable by the processor.

It is understood that there may be other applications that are stored in the memory and are executable by the processor as can be appreciated. Where any component discussed herein is implemented in the form of software, any one of a number of programming languages may be employed such as, for example, C, C++, C#, Objective C, Java^{®}, JavaScript^{®}, Perl, PHP, Visual Basic^{®}, Python^{®}, Ruby, Flash^{®}, or other programming languages.

A number of software components are stored in the memory and are executable by the processor. In this respect, the term "executable" means a program file that is in a form that can ultimately be run by the processor. Examples of executable programs may be, for example, a compiled program that can be translated into machine code in a format that can be loaded into a random access portion of the memory and run by the processor, source code that may be expressed in proper format such as object code that is capable of being loaded into a random access portion of the memory and executed by the processor, or source code that may be interpreted by another executable program to generate instructions in a random access portion of the memory to be executed by the processor, *etc.* An executable program may be stored in any portion or component of the memory including, for example, random access memory (RAM), read-only memory (ROM), hard drive, solid-state drive, USB flash drive, memory card, optical disc such as compact disc (CD) or digital versatile disc (DVD), floppy disk, magnetic tape, or other memory components.

The memory is defined herein as including both volatile and nonvolatile memory and data storage components. Volatile components are those that do not retain data values upon loss of power. Nonvolatile components are those that retain data upon a loss of power. Thus, the memory may comprise, for example, random access memory (RAM) (e.g., RAM), read-only memory (ROM), hard disk drives, solid-state drives, USB flash drives, memory cards accessed via a memory card reader, floppy disks accessed via an associated floppy disk drive, optical discs accessed via an optical disc drive, magnetic tapes accessed via an appropriate tape drive, and/or other memory components, or a combination of any two or more of these memory components. In addition, the RAM may comprise, for example, static random access memory (SRAM), dynamic random access memory (DRAM), or magnetic random access memory (MRAM) and other such devices. The ROM may comprise, for example, a programmable read-only memory (PROM), an erasable programmable read-only memory (EPROM), an electrically erasable programmable read-only memory (EEPROM), or other like memory device.

Also, the processor may represent multiple processors and/or multiple processor cores and the memory may represent multiple memories that operate in parallel processing circuits, respectively. In such a case, the local interface may be an appropriate network that facilitates communication between any two of the multiple processors, between any processor and any of the memories, or between any two of the memories, *etc.* The local interface may comprise additional systems designed to coordinate this communication, including, for example, performing load balancing. The processor may be of electrical or of some other available construction.

Although the frictionless payment application 121, the bill generation application 124, the anonymous payment application 127, the client application 169, and the merchant application 157, and other various systems described herein may be embodied in software or code executed by general purpose hardware as discussed above, as an alternative the same may also be embodied in dedicated hardware or a combination of software/general purpose hardware and dedicated hardware. If embodied in dedicated hardware, each can be implemented as a circuit or state machine that employs any one of or a combination of a number of technologies. These technologies may include, but are not limited to, discrete logic circuits having logic gates for implementing various logic functions upon an application of one or more data signals, application specific integrated circuits (ASICs) having appropriate logic gates, field-programmable gate arrays (FPGAs), or other components, *etc.* Such technologies are generally well known by those skilled in the art and, consequently, are not described in detail herein.

The flowcharts of FIGS. 3A-3C show the functionality and operation of an implementation of portions of the frictionless payment application 121, the bill generation application 124, and the anonymous payment application 127. If embodied in software, each block may represent a module, segment, or portion of code that comprises program instructions to implement the specified logical function(s). The program instructions may be embodied in the form of source code that comprises human-readable statements written in a programming language or machine code that comprises numerical instructions recognizable by a suitable execution system such as a processor in a computer system or other system. The machine code may be converted from the source code, *etc.* If embodied in hardware, each block may represent a circuit or a number of interconnected circuits to implement the specified logical function(s).

Although the flowcharts of FIGS. 3A-3C show a specific order of execution, it is understood that the order of execution may differ from that which is depicted. For example, the order of execution of two or more blocks may be scrambled relative to the order shown. Also, two or more blocks shown in succession in FIGS. 3A-3C may be executed concurrently or with partial concurrence. Further, in some embodiments, one or more of the blocks shown in FIGS. 3A-3C may be skipped or omitted. In addition, any number of counters, state variables, warning semaphores, or messages might be added to the logical flow described herein, for purposes of enhanced utility, accounting, performance measurement, or providing troubleshooting aids, *etc.* It is understood that all such variations are within the scope of the present disclosure.

Also, any logic or application described herein, including the frictionless payment application 121, the bill generation application 124, the anonymous payment application 127, the client application 169, and the merchant application 157, that comprises software or code can be embodied in any non-transitory computer-readable medium for use by or in connection with an instruction execution system such as, for example, a processor in a computer system or other system. In this sense, the logic may comprise, for example, statements including instructions and declarations that can be fetched from the computer-readable medium and executed by the instruction execution system. In the context of the present disclosure, a "computer-readable medium" can be any medium that can contain, store, or maintain the logic or application described herein for use by or in connection with the instruction execution system.

The computer-readable medium can comprise any one of many physical media such as, for example, magnetic, optical, or semiconductor media. More specific examples of a suitable computer-readable medium would include, but are not limited to, magnetic tapes, magnetic floppy diskettes, magnetic hard drives, memory cards, solid-state drives, USB flash drives, or optical discs. Also, the computer-readable medium may be a random access memory (RAM) including, for example, static random access memory (SRAM) and dynamic random access memory (DRAM), or magnetic random access memory (MRAM). In addition, the computer-readable medium may be a read-only memory (ROM), a programmable read-only memory (PROM), an erasable programmable read-only memory (EPROM), an electrically erasable programmable read-only memory (EEPROM), or other type of memory device.

Further, any logic or application described herein, including the frictionless payment application 121, the bill generation application 124, the anonymous payment application 127, the client application 000, and the merchant application 000, may be implemented and structured in a variety of ways. For example, one or more applications described may be implemented as modules or components of a single application. Further, one or more applications described herein may be executed in shared or separate computing devices or a combination thereof. For example, a plurality of the applications described herein may execute in the same computing device, or in multiple computing devices in the same computing environment 103. Additionally, it is understood that terms such as "application," "service," "system," "engine," "module," and so on may be interchangeable and are not intended to be limiting.

Disjunctive language such as the phrase "at least one of X, Y, or Z," unless specifically stated otherwise, is otherwise understood with the context as used in general to present that an item, term, etc., may be either X, Y, or Z, or any combination thereof (e.g., X, Y, and/or Z). Thus, such disjunctive language is not generally intended to, and should not, imply that certain embodiments require at least one of X, at least one of Y, or at least one of Z to each be present.

It should be emphasized that the above-described embodiments of the present disclosure are merely possible examples of implementations set forth for a clear understanding of the principles of the disclosure. Many variations and modifications may be made to the above-described embodiment(s) without departing substantially from the spirit and principles of the disclosure. All such modifications and variations are intended to be included herein within the scope of this disclosure and protected by the following claims.

### The following is a list of further preferred embodiments of the invention:

Embodiment 1: A non-transitory computer-readable medium embodying a program that, when executed by at least one computing device being configured to at least:
   obtain, from a merchant device, a document comprising native transaction data associated with an item a consumer desires to purchase at a merchant location;
   determine a bill comprising bill data associated with the native transaction data;
   transmit, to the merchant device, a bill status identifier of the bill data that uniquely identifies the bill from among a plurality of bills stored in a data store; and
   in an instance in which a network page is rendered on a client device, transmit, to the merchant device, an indication that the bill was paid.
Embodiment 2: The non-transitory computer-readable medium of embodiment 1, wherein the document further comprises an identifier of a JavaScript Object Notation (JSON) representation of data fields associated with an independent software vendor and the at least one computing device is further configured to at least:
   determine the bill based at least in part on the JSON representation.
Embodiment 3: The non-transitory computer-readable medium of embodiment 1, wherein the at least one computing device is further configured to at least:
   transmit a notification to cause a payment of the bill, wherein the notification is transmitted to at least one of: the merchant device or the client device associated with the consumer, wherein the notification comprises a Uniform Resource Locator (URL), or a Quick Response (QR) code or other encoded representation of the Uniform Resource Locator (URL);
   in an instance in which the notification is transmitted to the merchant device, cause the Uniform Resource Locator (URL), the Quick Response (QR) code or the other encoded representation of the Uniform Resource Locator (URL) to be output to an output device; and
   in an instance in which the QR code is captured by a camera of the client device or the notification is transmitted to the client device, generate the network page that can be rendered on the client device for payment of the bill by a payment card, an electronic wallet, reward points, an online payment platform, or a store credit.
Embodiment 4: The non-transitory computer-readable medium of embodiment 1, wherein the program, when executed, is configured to transmit the indication in an instance in which the at least one computing device obtains a Hypertext Transfer Protocol (HTTP) get request from the merchant device.
Embodiment 5: The non-transitory computer-readable medium of embodiment 4, wherein the HTTP get request comprises the bill status identifier.
Embodiment 6: A system, comprising:
   a data store; and
   at least one computing device in communication with the data store, the at least one computing device being configured to at least:
      obtain a plurality of example documents comprising native format transaction data associated with transactions of independent software vendors;
      obtain a trained predictive model for determining a plurality of features corresponding to a plurality of categories of the native format transaction data;
      provide at least one interface for obtaining a document comprising a native format transaction associated with an item a consumer desires to purchase;
      in an instance in which the document is obtained via the interface, obtain a vendor transformation template based at least in part on a predictive output generated by the trained predictive model;
      determine a bill comprising bill data based at least in part on applying the vendor transformation template to input fields of the native format transaction; and
      provide the at least one interface for transmitting an indication that the bill was paid.
Embodiment 7: The system of embodiment 6, wherein the trained predictive model comprises a k-nearest neighbor model.
Embodiment 8: The system of embodiment 6, wherein the vendor transformation template comprises a JavaScript Object Notation (JSON) query and transformation language.
Embodiment 9: The system of embodiment 6, wherein the interface is configured to accept the document via an Hypertext Transfer Protocol (HTTP) post comprising the document and a merchant identifier.
Embodiment 10: The system of embodiment 9, wherein the document comprises a signature associated with a body of the document.
Embodiment 11: The system of embodiment 10, wherein the interface being configured to accept the document comprises the at least one computing device being configured to validate the signature.
Embodiment 12: The system of embodiment 6, wherein the at least one computing device is further configured to at least:
   generate the trained predictive model using a library and the plurality of example documents.
Embodiment 13: The system of embodiment 6, wherein the plurality of features correspond to a plurality of key-value pairs of a representation of the native format transaction data, and the document comprises the plurality of key-value pairs.
Embodiment 14: A method, comprising:
   receiving, by at least one computing device from a merchant device, native transaction data associated with an item a user desires to purchase from a catalog of items offered by a merchant;
   receiving, by the at least one computing device from a client device associated with the user, a request for payment of a bill that is associated with the native transaction data;
   transmitting, by the at least one computing device to the merchant device, a bill status identifier that uniquely identifies the bill from among a plurality of bills stored in a data store;
   determining, by the at least one computing device, at least one of a plurality of payment methods that are unassociated with the user providing payment card information or personal information to the merchant;
   in an instance in which an identity of the user is verified, generating, by the at least one computing device, a network page comprising a selectable user interface element that can cause a payment of the bill by the at least one of the plurality of payment methods; and
   in an instance in which the selectable user interface element is selected, causing, by the at least one computing device, the payment of the bill to be initiated by the at least one of the plurality of payment methods.
Embodiment 15: The method of embodiment 14, wherein the request comprises an assertion associated with a web authentication application programming interface (API) or other assertion that is based at least in part on a signature signed by a private key.
Embodiment 16: The method of embodiment 15, wherein the web authentication API is a WebAuthn API.
Embodiment 17: The method of embodiment 15, wherein determining the at least one of the plurality of payment methods comprises determining that the client device is authorized to consume or generate a value identified in value data stored in the data store.
Embodiment 18: The method of embodiment 17, wherein determining that the client device is authorized to consume or generate the value is based at least in part on the assertion associated with the web authentication API.
Embodiment 19: The method of embodiment 17, wherein the request is for at least one of: anonymous validation of the client device or the merchant device, or anonymous creation of the value identified in the value data stored in the data store.
Embodiment 20: The method of embodiment 14, wherein the at least one of the plurality of payment methods comprise: an electronic wallet accessible to a client interface of the client device, or a store credit stored in value data in the data store.

## Claims

1. A non-transitory computer-readable medium embodying a program that, when executed by at least one computing device being configured to at least:
obtain, from a merchant device, a document comprising native transaction data associated with an item a consumer desires to purchase at a merchant location;
determine a bill comprising bill data associated with the native transaction data;
transmit, to the merchant device, a bill status identifier of the bill data that uniquely identifies the bill from among a plurality of bills stored in a data store; and
in an instance in which a network page is rendered on a client device, transmit, to the merchant device, an indication that the bill was paid.

2. The non-transitory computer-readable medium of claim 1, wherein the document further comprises an identifier of a JavaScript Object Notation (JSON) representation of data fields associated with an independent software vendor and the at least one computing device is further configured to at least:
determine the bill based at least in part on the JSON representation.

3. The non-transitory computer-readable medium of claim 1 or 2, wherein the at least one computing device is further configured to at least:
transmit a notification to cause a payment of the bill, wherein the notification is transmitted to at least one of: the merchant device or the client device associated with the consumer, wherein the notification comprises a Uniform Resource Locator (URL), or a Quick Response (QR) code or other encoded representation of the Uniform Resource Locator (URL);
in an instance in which the notification is transmitted to the merchant device, cause the Uniform Resource Locator (URL), the Quick Response (QR) code or the other encoded representation of the Uniform Resource Locator (URL) to be output to an output device; and
in an instance in which the QR code is captured by a camera of the client device or the notification is transmitted to the client device, generate the network page that can be rendered on the client device for payment of the bill by a payment card, an electronic wallet, reward points, an online payment platform, or a store credit.

4. The non-transitory computer-readable medium of one of claims 1 to 3, wherein the program, when executed, is configured to transmit the indication in an instance in which the at least one computing device obtains a Hypertext Transfer Protocol (HTTP) get request from the merchant device.

5. The non-transitory computer-readable medium of claim 4, wherein the HTTP get request comprises the bill status identifier.

6. A system, comprising:
a data store; and
at least one computing device in communication with the data store, the at least one computing device being configured to at least:
obtain a plurality of example documents comprising native format transaction data associated with transactions of independent software vendors;
obtain a trained predictive model for determining a plurality of features corresponding to a plurality of categories of the native format transaction data;
provide at least one interface for obtaining a document comprising a native format transaction associated with an item a consumer desires to purchase;
in an instance in which the document is obtained via the interface, obtain a vendor transformation template based at least in part on a predictive output generated by the trained predictive model;
determine a bill comprising bill data based at least in part on applying the vendor transformation template to input fields of the native format transaction; and
provide the at least one interface for transmitting an indication that the bill was paid.

7. The system of claim 6, wherein the trained predictive model comprises a k-nearest neighbor model.

8. The system of claim 6 or 7, wherein the vendor transformation template comprises a JavaScript Object Notation (JSON) query and transformation language.

9. The system of one of claims 6 to 8, wherein the interface is configured to accept the document via an Hypertext Transfer Protocol (HTTP) post comprising the document and a merchant identifier; and/or
wherein the document comprises a signature associated with a body of the document; and/or
wherein the interface being configured to accept the document comprises the at least one computing device being configured to validate the signature.

10. The system of one of claims 6 to 9, wherein the at least one computing device is further configured to at least:
generate the trained predictive model using a library and the plurality of example documents.

11. The system of one of claims 6 to 10, wherein the plurality of features correspond to a plurality of key-value pairs of a representation of the native format transaction data, and the document comprises the plurality of key-value pairs.

12. A method, comprising:
receiving, by at least one computing device from a merchant device, native transaction data associated with an item a user desires to purchase from a catalog of items offered by a merchant;
receiving, by the at least one computing device from a client device associated with the user, a request for payment of a bill that is associated with the native transaction data;
transmitting, by the at least one computing device to the merchant device, a bill status identifier that uniquely identifies the bill from among a plurality of bills stored in a data store;
determining, by the at least one computing device, at least one of a plurality of payment methods that are unassociated with the user providing payment card information or personal information to the merchant;
in an instance in which an identity of the user is verified, generating, by the at least one computing device, a network page comprising a selectable user interface element that can cause a payment of the bill by the at least one of the plurality of payment methods; and
in an instance in which the selectable user interface element is selected, causing, by the at least one computing device, the payment of the bill to be initiated by the at least one of the plurality of payment methods.

13. The method of claim 12, wherein the request comprises an assertion associated with a web authentication application programming interface (API) or other assertion that is based at least in part on a signature signed by a private key; and/or
wherein the web authentication API is a WebAuthn API.

14. The method of claim 13, wherein determining the at least one of the plurality of payment methods comprises determining that the client device is authorized to consume or generate a value identified in value data stored in the data store; and/or
wherein determining that the client device is authorized to consume or generate the value is based at least in part on the assertion associated with the web authentication API; or
wherein the request is for at least one of: anonymous validation of the client device or the merchant device, or anonymous creation of the value identified in the value data stored in the data store.

15. The method of one of claims 12 to 14, wherein the at least one of the plurality of payment methods comprise: an electronic wallet accessible to a client interface of the client device, or a store credit stored in value data in the data store.
